# EUROPEAN PATENT SPECIFICATION

(11) **EP 3 975 610 B1**
(45) Date of publication and mention of the grant of the patent: **23.10.2024**
(21) Application number: 20382855.3
(22) Date of filing: 28.09.2020
(51) Int. Cl.: H04W 28/02, H04L 67/56

(54) **METHOD AND SYSTEM FOR DATA SYNCHRONIZATION IN MULTI-ACCESS EDGE COMPUTING ENVIRONMENTS**
VERFAHREN UND SYSTEM ZUR DATENSYNCHRONISATION IN KANTENRECHNERUMGEBUNGEN MIT MEHRFACHZUGRIFF
PROCÉDÉ ET SYSTÈME DE SYNCHRONISATION DE DONNÉES DANS DES ENVIRONNEMENTS DE CALCUL EN PÉRIPHÉRIE MULTI-ACCÈS

(43) Date of publication of application: 30.03.2022
(73) Proprietor: FUNDACION TECNALIA RESEARCH & INNOVATION, 20009 San Sebastián, Gipúzcoa (ES)
(72) Inventor: Lage Serrano, Oscar, 20009 San Sebastián - Guipúzcoa (ES); González Rodríguez, Marta, 20009 San Sebastián - Guipúzcoa (ES); Gutierrez Agüero, Iván, 20009 San Sebastián - Guipúzcoa (ES); Regueiro Senderos, Cristina, 20009 San Sebastián - Guipúzcoa (ES)
(74) Representative: Balder IP Law, S.L.

(56) References cited:
- NGUYEN TIEN-DUNG ET AL: "Decentralized and Revised Content-Centric Networking-Based Service Deployment and Discovery Platform in Mobile Edge Computing for IoT Devices", IEEE INTERNET OF THINGS JOURNAL, IEEE, USA, vol. 6, no. 3, 1 June 2019 (2019-06-01), pages 4162 - 4175, XP011731235, DOI: 10.1109/JIOT.2018.2875489
- ZHANG YUAN ET AL: "Dynamic Service Placement for Virtual Reality Group Gaming on Mobile Edge Cloudlets", IEEE JOURNAL ON SELECTED AREAS IN COMMUNICATIONS, IEEE SERVICE CENTER, PISCATAWAY, US, vol. 37, no. 8, 1 August 2019 (2019-08-01), pages 1881 - 1897, XP011738407, ISSN: 0733-8716, [retrieved on 20190805], DOI: 10.1109/JSAC.2019.2927071

## Description

### TECHNICAL FIELD

The present invention relates to the field of data communication systems, and more particularly, to methods and systems to synchronize data shared by several Multi-access Edge Computing (MEC) data centers. The invention finds particular application in mobility services involving different MEC data centers.

### STATE OF THE ART

Nowadays, low latency requirements for certain services, such as critical services, make cloud data centers inadequate. In this context, release 16 of 3GPP standard includes Multi-access Edge Computing (MEC) to improve context awareness and reduce latency gathering, processing and storing of data and information in a local area. MEC data centers (for computation, storage and networking) are deployed by the network operators at various locations within the RAN (Radio Access Network) and/or collocated with different elements of the network, such as base stations, optical network units, radio network controller sites, or WiFi access points. The RAN is comprised of communication antennas and corresponding nodes B, providing coverage to different areas. MEC data centers allow data pre-processing in the edge in order to limit the amount of data to be sent to the cloud for further analysis with more complex computations (e.g. simulations, Al, etc.).Therefore, MEC data centers allow data pre-processing with fast response times for critical applications like autonomous vehicles or medical tele-surgeries, turning previous centralized (cloud-based) solutions into vertically distributed solutions converging edge and cloud capabilities and combining the advantages of edge (e.g. context awareness and real-time responses) and cloud (e.g. high computational and storage capabilities).

This hierarchy is fed with data from connected devices, such as loT devices, cellular phones, tablets, laptops or personal computers, provided to the nearest MEC data center, in order to be shared with other consuming devices from the MEC data center nearest to these consuming devices. Nguyen Tien-Dung et al. have disclosed ("Decentralized and Revised Cotent-Centric Networking-Based Service Deployment and Discovery Platform in Mobile Edge Computing for loT Devices", IEEE INTERNET OF THINGS JOURNAL, IEEE, USA, vol. 6, n° 3, 1 June 2019, pages 4162-4175) a decentralized content-centric networking (CNN)-based MEC service deployment/discovery protocol and platform which use a three-tiered hierarchical MEC network topology.

However, although data is correctly vertically sent from edge to cloud and vice versa when needed, for example when a source MEC data center (MEC data center in which a piece of data is collected) is not the same as a target MEC data center (MEC data center in which the piece of data is consumed), services requiring low latency do not perform efficiently. This problem is especially relevant in mobility (especially at high speeds, such as in a train or other vehicles) where the corresponding MEC data center may change quickly depending on the location of source/target connected devices.

Therefore, there is a need to share data within MEC data centers to improve service latency and without resorting to the cloud.

### DESCRIPTION OF THE INVENTION

The method described in the present invention intends to solve the shortcomings of the prior-art. The method for synchronizing data within a plurality of Multi-access Edge Computing (MEC) data centers is based on horizontal interaction between MEC data centers. Thus, regarding the sharing of a piece of data, even when source and target MEC data centers are not the same, the piece of data does not need to travel through cloud data centers. This allows the improvement/optimization of latency in the provided services, especially in mobility, while reducing bandwidth requirements by avoiding the cloud.

In the context of the present invention, horizontal interaction between MEC data centers refers to the communication from one MEC data center to another one, without using cloud data centers, of a higher hierarchical level, as intermediate nodes. In turn, vertical interaction refers to the communication from the edge (e.g. any MEC data center) to the cloud and vice versa, that is to say, between data centers of different hierarchical level.

MEC data centers include software modules, referred to as individual execution environments (EE) in which services and operations are executed. EE are the parts of the computing stack of a data center in charge of executing specific (context-neutral) functions that can be virtualized (as virtual machines) or presented in the form of an application. An execution environment represents software containers (such as operating systems, JVM, servlet/EJB containers, application servers, portal servers, etc.). In a MEC data center, each EE is associated to a specific service offered by the MEC data center. EEs are independent from each other within a MEC data center. Therefore, different EEs in a MEC data center manage (for example receive and/or transmit) different data.

The proposed data shynchronizing method is based on MEC communities, which are groups of MEC data centers which must synchronize their data. More precisely, MEC communities are defined by groups of EEs within respective MEC data centers, because the EEs associated to a specific service must synchronize their data. In order to consider a piece of data fully propagated within a MEC community, the piece of data must arrive at all the MEC data centers (more precisely, to all the EEs) belonging to the MEC community. For a certain data associated to a service, a EE of a MEC data center is synchronized within a MEC community to which it belongs when its data has been updated to its most recent version and all EEs of corresponding MEC data centers within the community have the most update data.

In the context of the present invention, latency is the time delay between the moment a piece of data reaches a source MEC data center EE and the moment the piece of data reaches a target MEC data center EE. In the present text, the expression "MEC data center" is often used to refer to a certain EE within the MEC data center, since the management of a certain service or application, and therefore to the data associated thereto, belongs to the specific EE associated to the service or application. Latency may vary from one application or service to another one. For example, in an application for Industry 4.0/Factory Automation, the expected maximum latency is about 5 ms; in an application for Intelligent transport system (ITS), the expected maximum latency is about 100 ms; in an application for autonomous driving, the expected maximum latency is about 1 ms; in an application for Virtual Learning Environment, the expected maximum latency is about 10 ms; in an application for Augmented Reality, the expected maximum latency is about 4 ms; and in an application for E-health, the expected maximum latency is about 10 ms. The expected maximum latency of a service or application is usually related to the criticality of the service or application.

In practice, the actual latency of a service or application will depend on the used communications protocols and on the network topology. For a certain communications protocol deployed following certain network topology, the method of the present invention optimizes the latency of a service or application.

In a first aspect of the present invention, a method for synchronizing data within a plurality of Multi-access Edge Computing (MEC) data centers located in a Radio Access Network of a wireless communication network, is disclosed. The method comprises: for a service or application defined in a MEC data center, creating a community of MEC data centers associated to said service or application, a community being a group of MEC data centers within which data related to said service or application must be synchronized; at each MEC data center of the community, defining a routing table for propagating data within the community of MEC data centers; wherein, when by means of the Radio Access Network, data belonging to said service or application, captured by a device in wireless communication with the Radio Access Network, is provided to a MEC data center of the community, said data is propagated with the MEC data centers of the community following the defined routing table, wherein said data is fully propagated within the MEC community when the data has reached all the MEC data centers in the community; wherein, when at least two pieces of data need to be simultaneously propagated by a MEC data center belonging to the community of MEC data centers, data propagation is prioritized according to at least one of the following criterion: a criticality parameter of the service or application to which the pieces of data are associated, an importance score of said data and a data propagation priority level; wherein, when all the MEC data centers of the community have received said data, the data is synchronized within the community.

In embodiments of the invention, the routing table implements a hop-by-hop method.

In embodiments of the invention, the routing table is defined as a best route from each MEC data center of the community.

In embodiments of the invention, the data propagation priority level depends at least on one of the following: the age of the piece of data being propagated and the current synchronization level within the community.

In embodiments of the invention, when at least two pieces of data need to be simultaneously propagated from a MEC data center belonging to the community of MEC data centers, data propagation is prioritized taking into account the three following criteria: the criticality parameter of the service or application to which the pieces of data are associated, the importance score of said data and the data propagation priority level.

In embodiments of the invention, the score of the three criteria is added up in order to obtain a combined score, which is used to decide which piece of data is propagated first from the MEC data center.

In embodiments of the invention, if the added-up score of a piece of data is the same as the added-up score of another piece of data, the value of each of the three criteria is weighed prior to adding up the score of the three criteria.

In embodiments of the invention, synchronization within the community is evaluated using a consensus algorithm.

In embodiments of the invention, the wireless communication network is a 5G network.

In a second aspect of the present invention, a system comprising a plurality of Multi-access Edge Computing (MEC) data centers located in a Radio Access Network of a wireless communication network, is disclosed. The system comprises: means for, for a service or application defined in a MEC data center, creating a community of MEC data centers associated to said service or application, a community being a group of MEC data centers within which data related to said service or application must be synchronized; means for, at each MEC data center of the community, defining a routing table for propagating data within the community of MEC data centers; means for sharing data with the MEC data centers of the community following the defined routing table, wherein said data is fully propagated within the MEC community when the data has reached all the MEC data centers in the community; and means for prioritizing data sharing according to at least one of the following criterion: a criticality parameter of the service or application to which the pieces of data are associated, an importance score of said data and a data propagation priority level.

In a third aspect of the present invention, a computer program product comprising computer program instructions/code for performing the method of the first aspect of the invention is disclosed.

In a fourth aspect of the present invention, a computer-readable memory/medium that stores program instructions/code for performing the method of the first aspect of the invention is disclosed.

The invention is applicable in different technology areas, such as autonomous driving, video surveillance, smart-cities, surveillance using autonomous drons, health remote control, onsite marketing, streaming on the go, AR/VR industrial automatization, among others.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a block diagram of a communication network infrastructure for 5G communications including Multi-access Edge Computing (MEC).
Figure 2 schematically illustrates exemplary ways of connecting one MEC data center to other MEC data centers.

### DESCRIPTION OF A WAY OF CARRYING OUT THE INVENTION

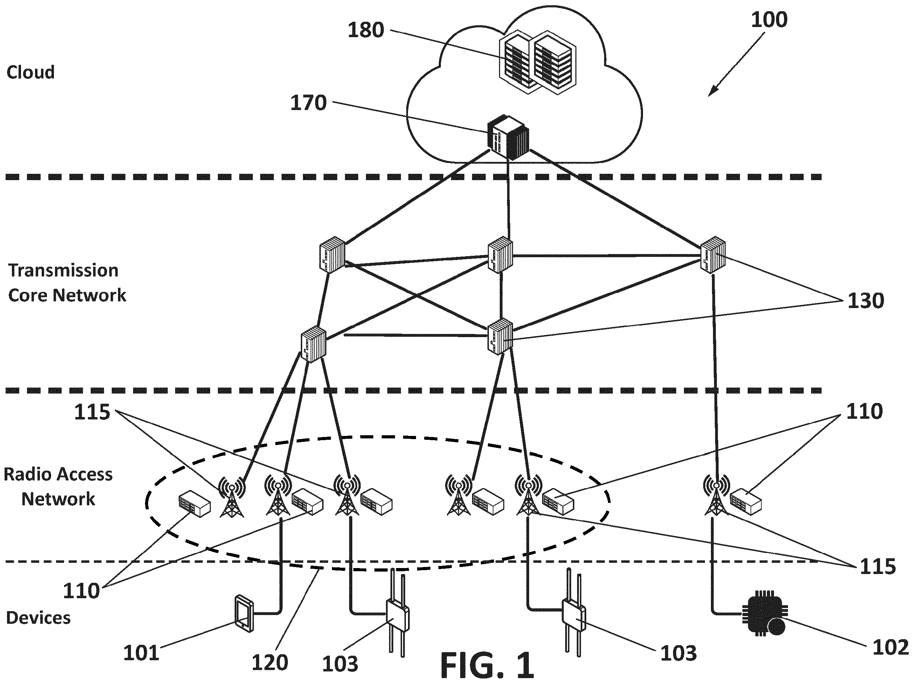

Figure 1 schematically illustrates a new communication infrastructure for cellular communications, such as 5G, -in general, for services requiring low latency- that is currently beginning to be deployed. Other technologies for cellular communications may be used, such as 3.5G, 4G or future generations, such as 6G. Different components of the shown infrastructure are classified into four levels in a logical classification point of view: devices (or end-user) level, Radio Access Network (RAN) level, Transmission Core Network level and Cloud level.

Figure 1 shows a plurality of devices 101-104 connected to a wireless communications network 100. The devices may be end-user devices (also referred to as end-user terminals), such as smartphones 101, tablets, laptops, or any other end-user device capable of establishing a wireless communication. The devices can also be sensors (sensing systems), such as traffic sensing systems 103-104, environmental sensing systems 102 or industrial equipment having data-capturing capabilities. In Figure 1, an environmental sensing system 102, capturing for example data related to air pollution, and several traffic sensing systems 103-104, capturing data related to traffic load, are shown. Sensors are typically data-providing devices. Data-providing devices usually send local information to a nearest data center (e.g. information about traffic and road conditions). Such devices are not aware of the propagation or the synchronization state of the sent information. In turn, end-user devices are typically data-consuming devices. Data-consuming devices usually make requests to a nearest data center (e.g. a query about the state of the roads). Such requests are usually made using a smartphone application through which an action is performed, or information is modified, or information is retrieved, for example. Although devices 101-104 typically operate in one of the modes (as data-providing devices or as data-consuming devices), there may be variations. For example, end-user devices 101 may operate as both data-consuming devices and as data-providing devices, depending on the application.

Sensors 102-104 connected to the wireless communications network 100 send data to a respective MEC data center 110 disposed in the vicinity of the antenna to which they are connected. Data may be sent by sensors periodically or non-periodically. In turn, a user of an end-user device, such as a smartphone 101, may make a request (e.g. a query about the state of the roads) through the wireless communications network 100, in particular to a data center 110 disposed in the vicinity of the antenna to which it is connected. Such request is usually made through an application executed at the end-user device. The user does not make a request or query to a specific data center; rather, he/she makes a request through an app installed in his/her smartphone 101 and the request is sent to the data center closest to the base station to which the smartphone 101 is connected.

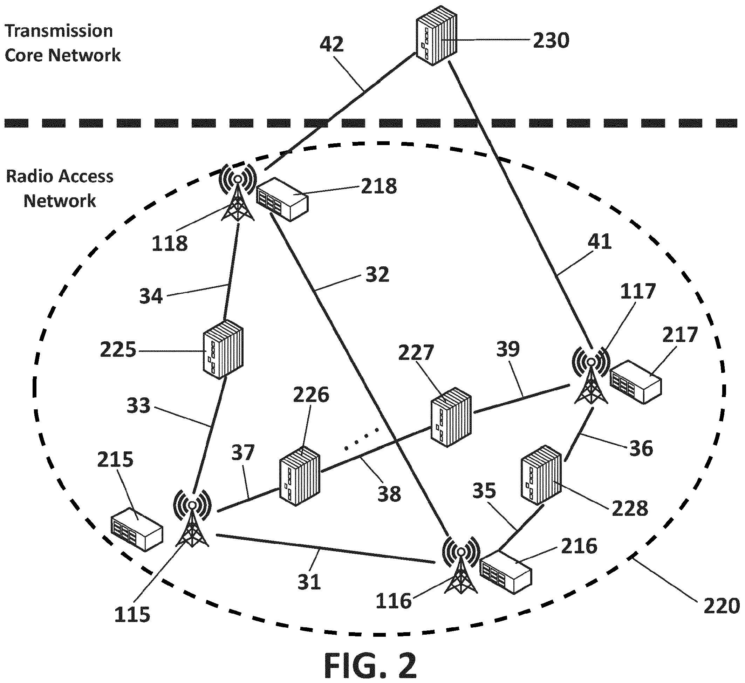

The Radio Access Network (RAN) is comprised of communication antennas and corresponding nodes B, such as gNB (next generation Node B), providing coverage to different areas that go from neighborhoods to cities. Conventional RAN equipment (gNBs, antennas and the like) is generally referred to as 115 in Figure 1. MEC data centers 110 are located close to communication antennas and nodes 115 (RAN equipment), covering such different areas before connecting to the transmission core network and ending up in the cloud when needed. MEC data centers 110 may be connected to RAN equipment 115 at different points in the RAN. The connection between MEC data centers 110 and RAN equipment 115 is out of the scope of the present invention. A MEC data center may be connected to one or more other MEC data centers following different technologies and different network architectures, which may require intermediate hops. For example, there may be direct dedicated links, for example using optical fiber, between two MEC data centers. Alternatively, it may be necessary to connect two MEC data centers using intermediate devices, such as routers. Alternatively, it may even be necessary to connect two MEC data centers through the core network. Non-limiting ways of connecting one MEC data center to other MEC data centers are illustrated in Figure 2. MEC data center 215 is connected with MEC data center 216 through a direct, dedicated link 31. The same occurs between MEC data center 216 and MEC data center 218, which are connected through direct, dedicated link 32. Other connections require intermediate devices: MEC data center 215 is connected with MEC data center 218 through network element 225 using links 33, 34; MEC data center 216 is connected with MEC data center 217 through network element 228 using links 35, 36; MEC data center 215 is connected with MEC data center 217 through network elements 226, 227 using links 37, 38, 39. Network elements 225-228 may for example be routers. Links 31-39 are preferably wired (for example, optical fiber links) or alternatively wireless (for example, radio links). The type of physical link may be imposed by the communications technology or protocol. Finally, MEC data center 217 is connected with MEC data center 218 through a network element 230, for example a router, located in the core network, using links 41, 42. Like links 31-39, links 41-42 may be imposed by the specific communications technology or protocol used. For example, in 5G technology, they are optical fiber links. How MEC data centers are connected with each other is out of the scope of the present invention.

MEC data centers 110 are used to store and process data as close as possible to the physical location at which a data request is made by a data-consuming device 101-104. As shown in Figure 1, a typical infrastructure comprises networking elements 130 at the transmission core network and cloud data centers 180 in the cloud, connected to the transmission core network through one or more cloud gateways 170. When possible, data is processed near the point of acquisition (e.g. at the Edge level), minimizing cloud ingress bandwidth and allowing support for "low-cost" devices featuring less processing than otherwise required. The hierarchy shown in Figure 1 is fed with data (e.g. traffic and road conditions) from sensors or other connected devices (in general, devices 101-104) which is provided to the nearest MEC data center 110, in order to obtain results to be shared with smartphone applications or other consuming devices (e.g. state of the roads) from their nearest MEC data center 110. Data is correctly vertically sent from the edge to the cloud when needed.

Edge computing allows data to be processed close to its creation place. Instead of sending such data through long ways up to data centers in the cloud, in edge computing data is processed in origin, where it is gathered and only certain data is sent to the cloud. Moving workload next to the edge of the network reduces the data travel distance, the latency and the bandwidth usage. The combination of low latency times achieved with edge computing with broadband technologies, such as 5G, opens high scale loT deployments in real time with massive data exchange between machines, servers and clients.

MEC data centers 110 and cloud data centers 180 have the same main functionalities. The difference between MEC and cloud data centers is in the orders of magnitude of these functionalities. Their main functionalities are: (1) Computing capabilities: As equipment has managed to become smaller and cheaper, and data processing needs have increased exponentially, multiple servers have been networked to increase processing power. Nowadays data centers are likely to have thousands of very powerful and very small servers running without stop. (2) Storage space: Data centers provide important services related to data storage, backup and recovery by means of hard disk drives, tape drives and/or other forms of internal and external storage, such as storage area networks (SAN), network attached storage (NAS), RAID and others. (3) Networking: The entire physical and network-based devices and equipment within a data center facility are established and interconnected to ensure that they can communicate and transfer data between each other and on an external network or Internet in a stable, secure, reliable and scalable way. For this purpose, networking equipment (such as routers, switches, modems, etc.), networking cabling (such as LAN/WAN and network interface cabling), a network addressing scheme (such as IP V4 or IP V6), network security (such as encryption algorithms, firewalls, IDS, etc.) and Internet connectivity (such as satellite, DSL, wireless, optical) are needed. (4) Control: A data center usually includes a Network Operation Centre (NOC) with tools for the monitoring, management and maintenance of computing, storage and networking infrastructure.

MEC and cloud data centers are therefore foreseen to pre-cache interesting data. Computing engines located in the data centers are foreseen to actively participate in data analytics and machine learning for value added services, as well as perform radio and network operations. Due to the infrastructure and operation cost, the amount of processing power and storage at MEC data centers is orders of magnitude smaller than the amount thereof at traditional cloud data centers. In fact, MEC data centers are usually micro data centers, which are small-scale modular data centers that include all the compute, storage, networking, power, cooling, and other infrastructure required for a given workload.

Each MEC data center 110 executes one or more EE. There is one EE for each service application provided by a MEC data center 110. In other words, in a MEC data center 110 there may be as many EEs as services or applications are provided by the MEC data center. In other words, services and applications are executed in individual EEs. Depending on the specific service/application, data required/produced by the service/application may be shared with some or many other MEC data centers (in particular, with their respective EEs) or stays only in the specific EE of the MEC data center producing/receiving the data. EEs may be, for example, virtualized (implemented as virtual machines).

The method for synchronizing data within a plurality of MEC data centers is based on horizontal interaction between MEC data centers 110, that is to say, beyond the area covered by each MEC data center 110. This is for example applicable when the source MEC data center (MEC data center receiving a piece of data from, for example, a sensor) is a different MEC data center from the target MEC data center (MEC data center at which the piece of data will be consumed). In such cases, data may be shared between MEC data centers without resorting to vertical interaction. This way, MEC data centers 110 are used to process data fast next to the request points (that is to say, next to the point at which the data-consuming device 101 is located). This allows optimizing (minimizing) actual latency for a certain service, which will be dependent on the deployed communications protocols and on the network topology, among others. For example, the larger it is the area covered by a data center MEC 110 (which is the area covered by the gNB 115 to which the MEC data center 110 is connected), the higher will be the expected latency. However, the method of data synchronizing of the invention minimizes the latency.

In turn, cloud data centers 180 store long-lasting data and execute high-computing demanding applications. Long-lasting data is data to be kept stored, as opposed to other data only used for processing and which, once processed, can be deleted. High computing demanding applications are applications that require high computing, in particular, higher than the computing capacity offered in the MEC data centers. For example, simulations, modeling, etc., which are usually not required in real time.

A service or application is deployed in an EE within one or more MEC data centers, that is to say, in all MEC data centers providing the service or application. In a MEC data center, there may be as many deployed services or applications as EEs. The service or application is usually deployed by a service/application developer prior to the service/application operation. Each service or application defined within one (or more) MEC data center may have a criticality parameter. The criticality parameter provides information about how critical the service or application is. Criticality is usually related to latency requirements. Thus, a criticality parameter represents a potential risk of exceeding a maximum latency for a certain service or application. For example, the more critical a service or application is, the less latency or response time it demands. As a matter of example, the criticality parameter of an application of autonomous driving typically has a value higher than the criticality parameter of an application for weather forecast, because typically the negative consequences of exceeding the maximum latency of the autonomous driving application (human lives may be threatened) are much higher than the negative consequences of exceeding the maximum latency of the weather forecast application (wrong selection of clothes). This means that all the pieces of data belonging to a same service or application will have the same service/application criticality parameter. Thus, certain applications or services, such as critical applications or services, for example autonomous driving, will have a high value of criticality, while other applications or services, such as non-critical ones, for example weather predictions, will have a low value of criticality. Criticality of a service or application is for example defined by the application developer. A mark, for example between 0 and M (M being a natural number) may be assigned to different criticality levels, wherein M indicates a highest criticality and 0 a lowest criticality. For example, data associated to an "autonomous driving" service/application may be ranked "M", while data associated to a "weather prediction" service/application may be ranked "0".

Besides, in a service or application involving different type of data, the different type of data may be given a score (data importance score). Each type of data within the service/application may have a higher or lower influence or impact in the service/application operation and, consequently, its importance to be propagated will be higher or lower. Therefore, the data importance score relates to the impact a type of data has within the service or application to which it belongs. This evaluation is preferably done by the application developer. A mark may be assigned to each type of data. For example, marks between 0 and N (N being a natural number) may be assigned, wherein N indicates a highest importance and 0 a lowest importance. For example, an "autonomous driving" service/application may involve different types of data, obtained from different sensors: data related to a front proximity sensor, data obtained from humidity sensors, and so on. Data from a front proximity sensor may be ranked "N", while data from a humidity sensor may be ranked "1" or "0".

For a service or application -usually defined or included for execution in several MEC data centers or, more precisely, in specific EEs within corresponding MEC data centers-, a community of MEC data centers, associated to the mentioned service or application, is created or defined. This may be done by the network operator prior to the service/application operation, in order to define which MEC data centers need to be synchronized for correct operation. In order to define the community, the service/application developer may provide the network operator with location requirement information related to the application/service. Location requirement information may refer to the physical area (such as a city, a region, etc.) covered by the service/application. With this information, one or more MEC communities can be defined. A community 120 is a group of MEC data centers within which data related to a certain service or application must be synchronized because devices 101-104 connected to any MEC data center 110 of the community may need the data for consumption. In Figure 1, a community 120 of data centers associated to different RAN equipment is shown for exemplary purpose. A piece of data is fully propagated within a MEC community 120 when the piece of data has reached all the MEC data centers in the community. A MEC data center may be considered to be synchronized within a MEC community to which it belongs when its data has been updated to its most recent version. In an ideal situation, all MEC data centers belonging to a community are considered to be synchronized when all of them have the most updated version of a piece of data.

There may be applications or services which do not need to share data and, therefore, the MEC community is formed by a single MEC data center. For example, let's consider an application for providing the temperature inside the base station in the vicinity of which a MEC data center is located. The EE in which the application is executed does not need to propagate any data related to this application, since only the MEC data center is concerned with the temperature of the base station at which the MEC data center is located. In this case, the MEC community for this EE (and associated application) is formed by the single MEC data center. No data sharing/propagation within a community is performed.

On the contrary, let's consider an application for providing information about the traffic status between two cities. In this case, a large number of traffic sensing devices 103-104 are substantially continuously collecting and providing data to their closest MEC data center 110 through the Radio Access Network. In this case, the application needs to synchronize all the data collected at different locations (sensors) between the two cities, since sensing devices 103-104 will provide data to different MEC data centers 110 along the road -typically a sensor delivers the collected data to the closest MEC data center. The MEC community may then be formed by all MEC data centers to which traffic sensing devices along the road between the two cities, are connected.

Different EEs can be executed within a MEC data center. In other words, a MEC data center may execute different applications or may provide or participate in the provision of different services. This implies that a single MEC data center may take part in several MEC communities. For example, a single MEC data center takes part in as many MEC communities as different EEs are deployed in the MEC data center. One or more of the applications or services provided by a MEC data center may be mission critical (MC) services (or applications). Non-limiting examples of MC services or applications are Industry 4.0/Factory Automation, smart grids, E-health (e.g. remote surgery), autonomous driving, Virtual Learning Environment, Augmented Reality, video surveillance, surveillance using autonomous drons, onsite marketing, streaming on the go and intelligent transportation systems (ITS).

Once a community 120 of MEC data centers has been defined, at each MEC data center of the community, a routing table is defined. The routing table provides a propagation scheme for propagating data within the community of MEC data centers. The routing table may be defined by the network operator prior to the service/application operation. The routing table enables data propagation inside the MEC community. The execution environment (EE) of each MEC data center (belonging to a community) may store a routing table comprising a respective address of the other MEC data centers belonging to the same community and a default route for vertical interaction (to/from the cloud). As a matter of example, MEC data centers 215-218 in Figure 2 may form a community 220 of data centers for a certain service managed by a respective EE embedded in each of the four MEC data centers 215-128. Protocols or technologies for data propagation are out of the scope of the present invention. Data will be shared among the MEC data centers of the community following the propagation scheme comprised in the routing table, using the available connectivity and communication protocols between MEC data centers.

In embodiments of the invention, the routing table is embodied as a file or database implementing the hop-by-hop method, that is to say, the file or database indicates, for each node (data center in the community), the next node to which the data must be sent from a certain node, in order to reach a certain destination. The routing table is for example defined as a best route from each MEC data center, taking into account one or different criteria, such as lowest latency, lowest cost or lowest power consumption. In a particular embodiment, the routing table may implement multicast (for example, a piece of data is directly sent to all the MEC data centers within the community, or to some of the MEC data centers in the community).

Then, when a piece of data is provided to a MEC data center of the community, the piece of data is shared -propagated- within the community of MEC data centers following the defined routing table. The piece of data may be captured and/or provided by a device 101-104 through the wireless communication network (RAN).

Another criterion that is taken into account when sharing data among MEC data centers of a community (through the propagation of new data within the community) is the data propagation priority level of the piece of data being propagated. This parameter is variable. It is updated as time passes. For example, the data propagation priority level may change as the piece of data travels from MEC data center to MEC data center. For example, any new piece of data may be assigned a certain value P (P being a natural number), and it may change as time passes. In other words, data propagation priority level may depend on the age of the data being propagated. Preferably, its value decreases as time passes. For example, at time t=to (initial time for a piece of data) the data propagation priority level is P, and at t= t₁ = to +T the data propagation priority level is P-1 (decreasing value); and at t= t₂ = t₁ +T the data propagation priority level is P-2. T is a time period that may be adjusted by a network or service operator. For example, T= 10 ms. Alternatively, its value increases as time passes. For example, at time t=to (initial time for a piece of data) the data propagation priority level is P, and at t= t₁ = t₀ +T the data propagation priority level is P+1; and at t= t₂ = t₁ +T the data propagation priority level is P+2. The data propagation priority level may depend on the time of creation of the piece of data (which may be defined as the time at which it leaves the device 101-104 from which it comes from; or as the time of creation at the device 101-104; or as the time of arrival at the MEC data center from the sending device 101-104) and on the current synchronization level, also referred to as synchronization status. The synchronization level or synchronization status depends on the amount -or percentage- of MEC data centers within the community which have already updated a certain piece of data. Therefore, the synchronization level gives an idea of how far or close a piece of data is from being fully synchronized (updated) within a community.

A time stamp may be added to the piece of data under propagation in order to count the age of the piece of data and therefore to update the data propagation priority level. For example, most recent data may have a highest data propagation priority level (which implies a highest margin of error), because the time at which ideal synchronization (full synchronization within the community) cannot be predicted. In contrast, older data may have a lower data propagation priority level (which implies a lower margin of error), since it may imply that the piece of data is locked, meaning that no full propagation (full synchronization) may be expected with certain probability. Once the synchronization process starts (that is to say, when a piece of data starts to be shared within the community, which implies that the synchronization level is not null), the piece of data becomes older, and its data propagation priority level may be reduced (this for example be controlled by a counter, counting the amount of time (age) of a piece of data). This may happen also when a piece of data does not manage to be propagated to a next MEC data center. Whether a piece of data is synchronized or not within the community is known by an application executed in the EE within each MEC data center. For example, a flag associated to a piece of data may indicate in an EE that the piece of data is synchronized (flag ="1"). Alternatively, the reception date of a piece of data may indicate in the EE that the piece of data is synchronized.

The arrival of new pieces of data is detected by the EE of the corresponding service/application(s). It may happen, however, that two or more different pieces of data need to be propagated simultaneously (or substantially simultaneously) from a MEC data center towards the other MEC data centers in the community. In other words, two or more different pieces of data arrive simultaneously (or substantially simultaneously), that is to say, substantially at the same time instant, at a MEC data center for synchronization within the community. This situation may be caused by different reasons. Usually, the two or more different pieces of data come from different sources (e.g. devices). For example, because two or more devices 101-104 connected to a same MEC data center (more precisely, to the RAN equipment to which the MEC data center belongs) provide new data to the MEC data center (the two data belonging to a same application or service or to a different one); or because the MEC data center receives simultaneously two pieces of data from other MEC data centers (either from a same community -and therefore corresponding to a same service/application; or from two communities -and therefore corresponding to a different service/application). When this happens, that is to say, when two or more different pieces of data need to be propagated simultaneously (or substantially simultaneously) from a MEC data center, data propagation is prioritized according to different criteria. Data propagation is prioritized according to at least one of the following criterion: the criticality parameter of the service or application to which the pieces of data are associated, the importance score of the data and the data propagation priority level. Prioritization may be done by the service/application developer or by any other person managing the MEC data centers. Data propagation is prioritized according to the three mentioned criteria

In a preferred embodiment, data propagation is prioritized according to the combination of the former criteria (parameters), taking into account the score (value) of all of them: the criticality of the service or application to which the pieces of data is associated (this criterion only applies when the two or more piece of data belong to different services/applications), importance score of said data and data propagation priority level. For example, the sum of the values of the three parameters may be added up, and the piece of data having higher summed-up value will be propagated first.

For example, the following two pieces of data arrive at a MEC data center simultaneously. Let's assume that all parameters range from 0 to 10:
(a) Considering an autonomous driving application having a criticality parameter = 10 (high), a piece of data (or a set of pieces of data) corresponding to data captured by a front sensor. This type of data is scored = 10 (high, because front sensors are very relevant in autonomous driving). The data propagation priority level = 10 (according for example to the age of the data). The total score is 10 + 10 + 10 = 30.
(b) Considering an automatic air application having a criticality parameter = 1 (low, it's not critical), a piece of data scored = 10 (high, it's a type of data with high priority). The data propagation priority level = 10 (according for example to the age of the data). The total score is 1 + 10+ 10 = 21.

In this case, by comparing the total score of the first piece of data and the total score of the second one, since 30 > 21, the piece(s) of data of the autonomous driving application will be propagated first.

However, let's imagine that the piece of data of the first case (autonomous driving) is very old, for example 5 seconds, which is most probably much higher than a suitable data age for preventing an accident. Therefore, in spite of being a critical application (criticality parameter = 10), and in spite of being a very relevant type of data (from a front sensor, scored as 10), the data propagation priority level = 1 (very old piece of data). The total score is 10 + 10 + 1 = 21.

In this case, both pieces of data (autonomous driving and automatic air application), which arrived simultaneously at a MEC data center, have the same score (21). In this case, the three parameters are preferably weighed. For example, the data propagation priority level (age of the piece of data) may be given a weight of 0.5, while the two other parameters (criticality parameter and type of data) are each given a weight of 0.25. In the shown particular example, the first piece of data (autonomous driving, old data) will have a final score of: 10*0.25 + 10*0.25 + 1*0.5 = 5.5. In turn, the second piece of data (automatic air application) will have a final score of 1*0.25 + 10*0.25 + 10*0.5 = 7.75. Therefore, the data corresponding to the automatic air application will be shared first.

A MEC data center may check, prior to starting synchronization of a new piece of data within the community of MEC data centers, whether the value of the new piece of data has been modified with respect to the last value received for that same piece of data. This way, propagation of a non-updated data can be prevented. For example, if a temperature sensor sends a value of captured temperature to a MEC data center (in particular, to a EE therein) every 5 minutes, that temperature value will start synchronizing through the defined MEC community every 5 minutes, in order to try to keep the community synchronized. However, if that temperature value does not change in one hour, it may be unnecessary to synchronize the temperature value every 5 minutes. If the corresponding EE at the source MEC data center verifies that the value of the data has not been modified, it may decide not to propagate any new data value, keeping the MEC community synchronized and avoiding unnecessary propagations (unnecessary latency increments and unnecessary use of communications resources).

A new piece of data may be considered to be fully synchronized inside the MEC community following different criteria. For example, a consensus algorithm may be used. The consensus algorithm guarantees that all MEC data centers in the community have the same data value. The consensus algorithm is out of the scope of the present invention.

The synchronization process (data sharing until its most updated version has reached all the MEC data centers in a community) requires a synchronization time. Synchronization time may depend on specific network features (such as network performance, network reliability, network infrastructure, such as number of required hops, and security, which may affect data propagation time and, therefore, synchronization) and the MEC community size (for example, in a MEC community having a single MEC data center, synchronization is inmediate, while in a MEC community having several MEC data centers, synchronization will require longer time; this fact is independent from the network features, since it depends enterily on the amount of members within a community).

It may happen that, after a certain time period, a piece of data is not totally synchronized inside the MEC community. The data propagation priority level (or a timestamp associated thereto) is then relevant in order to know the time at which a last data update happened and to determine if the current data value (although maybe not the most updated one) is useful (enough) according to the service/application or not.

For example, let's consider an application for obtaining a temperature value based on the outdoor temperature value received from a sensor every 5 minutes. Even if the value at a certain time (for example only during the synchronization process) is not the most current one and is for example 5 minutes old, it can be considered valid, since it is assumed that there will not be very sudden changes in temperature and probably, the most recent temperature will be very similar. On the contrary, let's consider a critical application, for example, any application related to autonomous driving. In this case, not updating a piece of data may be decisive. In this case, updating a piece of data should be a must. At least, not updating a piece of data should at least been notified, for example as a "synchronization fault" advice.

Any user, for example by means of a device 101-104, such as a smartphone implementing a suitable application, can request a certain service involving any MEC data centers within the community 120, 220. This may be done by means of the 5G RAN operation. Data is therefore requested in the corresponding MEC data center EE. The requested service (data provision, for example) is provided because all the MEC data centers within the community 120, 220 are synchronized following the described method. Latency of data delivery is thus optimized. Besides, if another user requests the same service at the same time through another MEC data center within the community 120, 220, the same result will be provided in substantially real-time.

In sum, regardless of the communications protocols and of the network topology, the method of the present invention optimizes (minimizes) the latency of a service or application by minimizing the synchronization time of a piece of data among the MEC data centers requiring the piece of data. The proposed algorithm is based on the best path between source and target MEC data centers, defined in the routing table, in horizontal interaction between MEC data centers. In the event of several pieces of data requiring simultaneous synchronization, data synchronization through the involved MEC data centers is prioritized according to the explained criteria. Vertical interaction (through the cloud) is prevented. This is especially interesting in mobility services involving different MEC data centers.

In sum, the proposed method manages to optimize data synchronization among MEC data centers requiring the same data, which is a typical scenario in mobility services. This improves the provision of services, in particular mobility services, requiring low latency, since latency is minimized.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for synchronizing data within a plurality of Multi-access Edge Computing, MEC, data centers located in a Radio Access Network of a wireless communication network, the method comprising:
for a service or application defined in a MEC data center (110, 215-218), creating a community (120, 220) of MEC data centers associated to said service or application, a community (120, 220) being a group of MEC data centers within which data related to said service or application must be synchronized;
at each MEC data center of the community (120, 220), defining a routing table for propagating data within the community (120, 220) of MEC data centers;
wherein, when by means of the Radio Access Network, data belonging to said service or application, captured by a device (101-104) in wireless communication with the Radio Access Network, is provided to a MEC data center of the community (120, 220), said data is propagated with the MEC data centers of the community (120, 220) following the defined routing table, wherein said data is fully propagated within the MEC community (120, 220) when the data has reached all the MEC data centers in the community;
wherein, when at least two pieces of data need to be simultaneously propagated by a MEC data center belonging to the community (120, 220) of MEC data centers, data propagation is prioritized according to at least one of the following criterion: a criticality parameter of the service or application to which the pieces of data are associated, an importance score of said data and a data propagation priority level;
wherein, when all the MEC data centers of the community (120, 220) have received said data, the data is synchronized within the community (120, 220).

2. The method according to claim 1, wherein the routing table implements a hop-by-hop method.

3. The method according to any one of claims 1-2, wherein the routing table is defined as a best route from each MEC data center of the community (120, 220).

4. The method according to any one of claims 1-3, wherein the data propagation priority level depends at least on one of the following: the age of the piece of data being propagated and the current synchronization level within the community (120, 220).

5. The method according to any one of claims 1-4, wherein when at least two pieces of data need to be simultaneously propagated from a MEC data center belonging to the community (120, 220) of MEC data centers, data propagation is prioritized taking into account the three following criteria: the criticality parameter of the service or application to which the pieces of data are associated, the importance score of said data and the data propagation priority level.

6. The method according to claim 5, wherein the score of the three criteria is added up in order to obtain a combined score, which is used to decide which piece of data is propagated first from the MEC data center.

7. The method according to claim 6, wherein if the added-up score of a piece of data is the same as the added-up score of another piece of data, the value of each of the three criteria is weighed prior to adding up the score of the three criteria.

8. The method according to any one of claims 1-7, wherein synchronization within the community (120, 220) is evaluated using a consensus algorithm.

9. The method according to any one of claims 1-8, wherein the wireless communication network is a 5G network.

10. A system comprising a plurality of Multi-access Edge Computing, MEC, data centers of a Radio Access Network of a wireless communication network, the system comprising:
means for, for a service or application defined in a MEC data center (110, 215-218), creating a community (120, 220) of MEC data centers associated to said service or application, a community (120, 220) being a group of MEC data centers within which data related to said service or application must be synchronized;
means for, at each MEC data center of the community (120, 220), defining a routing table for propagating data within the community (120, 220) of MEC data centers;
means for sharing data with the MEC data centers of the community (120, 220) following the defined routing table, wherein said data is fully propagated within the MEC community (120, 220) when the data has reached all the MEC data centers in the community; and
means for prioritizing data sharing according to at least one of the following criterion: a criticality parameter of the service or application to which the pieces of data are associated, an importance score of said data and a data propagation priority level.

11. A computer program product comprising computer program instructions/code for performing the method according to any one of claims 1-9.

12. A computer-readable medium that stores program instructions/code for performing the method according to any one of claims 1-9.

## Patentansprüche

1. Verfahren zum Synchronisieren von Daten innerhalb von mehreren Multi-Access-Edge-Computing, MEC, Rechenzentren, die sich in einem Funkzugangsnetzwerk eines drahtlosen Kommunikationsnetzwerks befinden, wobei das Verfahren aufweist:
für einen Dienst oder eine Anwendung, der oder die in einem MEC-Rechenzentrum (110, 215-218) definiert ist, Erzeugen einer Gemeinschaft (120, 220) von MEC-Rechenzentren, die mit dem Dienst oder der Anwendung assoziiert sind, wobei eine Gemeinschaft (120, 220) eine Gruppe von MEC-Rechenzentren ist, innerhalb derer Daten, die sich auf den Dienst oder die Anwendung beziehen, synchronisiert werden müssen;
in jedem MEC-Rechenzentrum der Gemeinschaft (120, 220), Definieren einer Routing-Tabelle zum Propagieren von Daten innerhalb der Gemeinschaft (120, 220) von MEC-Rechenzentren,
wobei, wenn mittels des Funkzugangsnetzwerks zu dem Dienst oder der Anwendung gehörende Daten, die von einer Vorrichtung (101-104) in drahtloser Kommunikation mit dem Funkzugangsnetzwerk erfasst werden, einem MEC-Rechenzentrum der Gemeinschaft (120, 220) bereitgestellt werden, die Daten mit den MEC-Rechenzentren der Gemeinschaft (120, 220) gemäß der definierten Routing-Tabelle propagiert werden, wobei die Daten vollständig innerhalb der MEC-Gemeinschaft (120, 220) propagiert werden, wenn die Daten alle MEC-Rechenzentren in der Gemeinschaft erreicht haben;
wobei, wenn mindestens zwei Datenstücke gleichzeitig von einem MEC-Rechenzentrum, das zu der Gemeinschaft (120, 220) von MEC-Rechenzentren gehört, propagiert werden müssen, die Datenpropagierung gemäß mindestens einem der folgenden Kriterien priorisiert wird: einem Kritikalitätsparameter des Dienstes oder der Anwendung, mit dem oder der die Datenstücke assoziiert sind, einer Wichtigkeitsbewertung der Daten und einem Datenpropagierungs-Prioritätsgrad;
wobei, wenn alle MEC-Rechenzentren der Gemeinschaft (120, 220) die Daten empfangen haben, die Daten innerhalb der Gemeinschaft (120, 220) synchronisiert werden.

2. Verfahren nach Anspruch 1, wobei die Routing-Tabelle ein Hop-by-Hop-Verfahren implementiert.

3. Verfahren nach einem der Ansprüche 1 bis 2, wobei die Routing-Tabelle als eine beste Route von jedem MEC-Rechenzentrum der Gemeinschaft (120, 220) definiert ist.

4. Verfahren nach einem der Ansprüche 1 bis 3, wobei der Datenpropagierungs-Prioritätsgrad mindestens von einem des Folgenden abhängt: dem Alter des zu propagierenden Datenstücks und der aktuellen Synchronisationsstufe innerhalb der Gemeinschaft (120, 220).

5. Verfahren nach einem der Ansprüche 1 bis 4, wobei, wenn mindestens zwei Datenstücke gleichzeitig von einem MEC-Rechenzentrum, das zu der Gemeinschaft (120, 220) von MEC-Rechenzentren gehört, propagiert werden müssen, die Datenpropagierung unter Berücksichtigung der drei folgenden Kriterien priorisiert wird: des Kritikalitätsparameters des Dienstes oder der Anwendung, mit dem oder der die Datenstücke assoziiert sind, der Wichtigkeitsbewertung der Daten und des Datenpropagierungs-Prioritätsgrads.

6. Verfahren nach Anspruch 5, wobei die Bewertung der drei Kriterien addiert wird, um eine kombinierte Bewertung zu erhalten, die verwendet wird, um zu entscheiden, welches Datenstück zuerst vom MEC-Rechenzentrum propagiert wird.

7. Verfahren nach Anspruch 6, wobei, wenn die addierte Bewertung eines Datenstücks die gleiche ist wie die addierte Bewertung eines anderen Datenstücks, der Wert jedes der drei Kriterien vor dem Addieren der Bewertung der drei Kriterien gewichtet wird.

8. Verfahren nach einem der Ansprüche 1 bis 7, wobei die Synchronisation innerhalb der Gemeinschaft (120, 220) unter Verwendung eines Konsensalgorithmus bewertet wird.

9. Verfahren nach einem der Ansprüche 1 bis 8, wobei das drahtlose Kommunikationsnetzwerk ein 5G-Netz ist.

10. System, das mehrere Multi-Access-Edge-Computing, MEC, Rechenzentren eines Funkzugangsnetzwerks eines drahtlosen Kommunikationsnetzwerks aufweist, wobei das System aufweist:
eine Einrichtung, um für einen Dienst oder eine Anwendung, der oder die in einem MEC-Rechenzentrum (110, 215-218) definiert ist, eine Gemeinschaft (120, 220) von MEC-Rechenzentren zu erzeugen, die mit dem Dienst oder der Anwendung assoziiert sind, wobei eine Gemeinschaft (120, 220) eine Gruppe von MEC-Rechenzentren ist, in der Daten, die sich auf den Dienst oder die Anwendung beziehen, synchronisiert werden müssen;
eine Einrichtung, um in jedem MEC-Rechenzentrum der Gemeinschaft (120, 220) eine Routing-Tabelle zum Propagieren von Daten innerhalb der Gemeinschaft (120, 220) von MEC-Rechenzentren zu definieren;
eine Einrichtung zur gemeinsamen Nutzung von Daten mit den MEC-Rechenzentren der Gemeinschaft (120, 220), die der definierten Routing-Tabelle folgen, wobei die Daten vollständig innerhalb der MEC-Gemeinschaft (120, 220) propagiert werden, wenn die Daten alle MEC-Rechenzentren in der Gemeinschaft erreicht haben; und
eine Einrichtung zur Priorisierung der gemeinsamen Datennutzung gemäß mindestens einem der folgenden Kriterien:
einem Kritikalitätsparameter des Dienstes oder der Anwendung, mit dem oder der die Datenstücke assoziiert sind, einer Wichtigkeitsbewertung der Daten und einem Datenpropagierungs-Prioritätsgrad.

11. Computerprogrammprodukt, das Computerprogrammanweisungen oder -codes zum Durchführen des Verfahrens nach einem der Ansprüche 1 bis 9 aufweist.

12. Computerlesbares Medium, das Programmanweisungen oder -codes zum Durchführen des Verfahrens nach einem der Ansprüche 1 bis 9 speichert.

## Revendications

1. Méthode de synchronisation de données à l'intérieur d'une pluralité de centres de données à Informatique Périphérique Multi-accès (*Multi-access Edge Computing*), MEC, situés dans un Réseau d'Accès Radioélectrique d'un réseau de communication sans fil, la méthode comprenant :
pour un service ou une application définis dans un centre de données MEC (110, 215-218), la création d'une communauté (120, 220) de centres de données MEC associés audit service ou à ladite application, une communauté (120, 220) étant un groupe de centres de données MEC à l'intérieur duquel des données relatives audit service ou à ladite application doivent être synchronisées ;
au niveau de chaque centre de données MEC de la communauté (120, 220), la définition d'une table de routage pour la propagation de données à l'intérieur de la communauté (120, 220) de centres de données MEC ;
dans laquelle, lorsqu'au moyen du Réseau d'Accès Radioélectrique, une donnée appartenant audit service ou à ladite application, capturée par un dispositif (101-104) dans une communication sans fil avec le Réseau d'Accès Radioélectrique, est fournie à un centre de données MEC de la communauté (120, 220), ladite donnée est propagée avec les centres de données MEC de la communauté (120, 220) en suivant la table de routage définie, dans laquelle ladite donnée est entièrement propagée à l'intérieur de la communauté MEC (120, 220) lorsque la donnée a atteint tous les centres de données MEC dans la communauté ;
dans laquelle, lorsqu'au moins deux éléments de donnée doivent être propagés simultanément par un centre de données MEC appartenant à la communauté (120, 220) de centres de données MEC, la propagation de donnée est priorisée en fonction d'au moins l'un parmi les critères suivants : un paramètre de criticité du service ou de l'application auquel/à laquelle sont associés les éléments de donnée, un score d'importance de ladite donnée et un niveau de priorité de propagation de donnée ;
dans laquelle, lorsque tous les centres de données MEC de la communauté (120, 220) ont reçu ladite donnée, la donnée est synchronisée à l'intérieur de la communauté (120, 220).

2. Méthode selon la revendication 1, dans laquelle la table de routage met en oeuvre une méthode bond par bond.

3. Méthode selon l'une quelconque des revendications 1-2, dans laquelle la table de routage est définie en tant que meilleure route depuis chaque centre de données MEC de la communauté (120, 220).

4. Méthode selon l'une quelconque des revendications 1-3, dans laquelle le niveau de priorité de propagation de donnée dépend au moins de l'un parmi ce qui suit : l'âge de l'élément de donnée qui est propagé et le niveau de synchronisation en cours à l'intérieur de la communauté (120, 220).

5. Méthode selon l'une quelconque des revendications 1-4, dans laquelle lorsqu'au moins deux éléments de donnée doivent être propagés simultanément depuis un centre de données MEC appartenant à la communauté (120, 220) de centres de données MEC, la propagation de donnée est priorisée en tenant compte des trois critères suivants : le paramètre de criticité du service ou de l'application auquel/à laquelle sont associés les éléments de donnée, le score d'importance de ladite donnée et le niveau de priorité de propagation de donnée.

6. Méthode selon la revendication 5, dans laquelle le score des trois critères est additionné afin d'obtenir un score combiné qui est utilisé pour décider quel élément de donnée est propagé en premier depuis le centre de données MEC.

7. Méthode selon la revendication 6, dans laquelle si le score additionné d'un élément de donnée est le même que le score additionné d'un autre élément de donnée, la valeur de chacun des trois critères est pondérée avant d'additionner le score des trois critères.

8. Méthode selon l'une quelconque des revendications 1-7, dans laquelle la synchronisation à l'intérieur de la communauté (120, 220) est évaluée à l'aide d'un algorithme de consensus.

9. Méthode selon l'une quelconque des revendications 1-8, dans laquelle le réseau de communication sans fil est un réseau 5G.

10. Système comprenant une pluralité de centres de données à Informatique Périphérique Multi-accès, MEC, d'un Réseau d'Accès Radioélectrique d'un réseau de communication sans fil, le système comprenant :
un moyen pour, pour un service ou une application définis dans un centre de données MEC (110, 215-218), créer une communauté (120, 220) de centres de données MEC associés audit service ou à ladite application, une communauté (120, 220) étant un groupe de centres de données MEC à l'intérieur duquel des données relatives audit service ou à ladite application doivent être synchronisées ;
un moyen pour, au niveau de chaque centre de données MEC de la communauté (120, 220), définir une table de routage pour la propagation de données à l'intérieur de la communauté (120, 220) de centres de données MEC ;
un moyen pour partager une donnée avec les centres de données MEC de la communauté (120, 220) en suivant la table de routage définie, dans lequel ladite donnée est entièrement propagée à l'intérieur de la communauté MEC (120, 220) lorsque la donnée a atteint tous les centres de données MEC dans la communauté ; et
un moyen pour prioriser un partage de donnée en fonction d'au moins l'un parmi les critères suivants : un paramètre de criticité du service ou de l'application auquel/à laquelle sont associés les éléments de donnée, un score d'importance de ladite donnée et un niveau de priorité de propagation de donnée.

11. Produit de programme informatique comprenant des instructions /un code de programme informatique pour exécuter la méthode selon l'une quelconque des revendications 1-9.

12. Support lisible par ordinateur qui stocke des instructions /un code de programme pour exécuter la méthode selon l'une quelconque des revendications 1-9.
